# EUROPEAN PATENT APPLICATION

(11) **EP 4 497 777 A1**
(43) Date of publication of application: **29.01.2025**
(21) Application number: 23774949.4
(22) Date of filing: 22.03.2023
(51) Int. Cl.: C08J 5/04, B32B 5/28

(54) **PREPREG, MOLDED BODY, PRESSURE CONTAINER, METHOD FOR PRODUCING PREPREG, AND METHOD FOR PRODUCING MOLDED BODY**

(30) Priority: 23.03.2022 JP 2022046687
(71) Applicant: Mitsubishi Chemical Corporation, Tokyo 100-8251 (JP)
(72) Inventor: FURUHASHI, Yuma, Tokyo 100-8251 (JP); ITO, Takuya, Tokyo 100-8251 (JP)
(74) Representative: Hoffmann Eitle
(86) International application number: PCT/JP2023/011208
(87) International publication number: WO 2023/182354

(57) **Abstract**

Provided is a prepreg in which gas barrier properties in a case of being molded into a molded product are improved. In the prepreg of the present invention, a thermoplastic resin with which a carbon fiber base material is impregnated, and the thermoplastic resin comprises a vinyl alcohol-based polymer.

## Description

### [Technical Field]

The present invention relates to a prepreg, a molded product, a pressure container, a method for manufacturing a prepreg, and a method for manufacturing a molded product.

Priority is claimed on Japanese Patent Application No. 2022-046687, filed on March 23, 2022, the contents of which are incorporated herein by reference.

### [Background Art]

A carbon fiber reinforced polymer (CFRP) containing carbon fibers and a matrix resin has been developed for a wide range of applications such as aircraft and automobiles as a metal substitute material from the feature that the CFRP is lightweight and has high strength as compared with metal, and the range of applications has been further expanded in recent years.

As a molding material for obtaining the CFRP, for example, a sheet-like prepreg in which carbon fibers are impregnated with a matrix resin has been known. The CFRP is obtained by heating and pressurizing the prepreg to mold the prepreg.

As the matrix resin, a thermosetting resin such as an epoxy resin, or a thermoplastic resin such as an engineering plastic is used.

As an example of the application of the CFRP, a high-pressure tank or the like, used for storage or transportation of natural gas or the like, is known. As the high-pressure tank using the CFRP, a high-pressure tank in which an outer circumferential surface of a resin container (resin liner) is reinforced with a reinforcing layer made of the CFRP is known. The high-pressure tank is exposed to high-pressure gas, and thus is required to have excellent gas barrier properties.

For example, Patent Document 1 discloses a high-pressure tank including a resin liner, a reinforcing layer which covers an outer circumferential surface of the resin liner, and a metal layer provided on an inner surface of the resin liner. In the high-pressure tank disclosed in Patent Document 1, the gas barrier properties are improved by providing the metal layer on the inner surface of the resin liner.

However, when the metal layer is provided on the inner surface of the resin liner, the metal layer may be peeled off when subjected to high pressure.

Therefore, as a high-pressure tank in which the gas barrier properties are improved without providing the metal layer on the inner surface of the resin liner, for example, Patent Document 2 discloses a high-pressure tank including a resin liner which has a two-layer structure including a gas barrier layer composed of an ethylene-vinyl alcohol copolymer (EVOH), and a reinforcing layer which covers a surface of the resin liner on the gas barrier layer side. The high-pressure tank disclosed in Patent Document 2 includes the resin liner with a two-layer structure, and the gas barrier properties are improving by using one layer as the gas barrier layer.

### [Citation List]

### [Patent Documents]

[Patent Document 1]
   Japanese Unexamined Patent Application, First Publication No. 2006-316934
[Patent Document 2]
   Japanese Unexamined Patent Application, First Publication No. 2010-71444

### [Summary of Invention]

### [Technical Problem]

However, in the high-pressure tank disclosed in Patent Document 2, since the resin (EVOH) constituting the gas barrier layer is different from the matrix resin of the CFRP as the reinforcing layer, there is a problem such as interlayer peeling due to insufficient interlayer adhesion between the gas barrier layer and the reinforcing layer, or gas retained in the interlayer being leaked to the outside due to a pressure change, and the gas barrier properties are not always satisfied.

Therefore, the prepreg which is a molding material of the CFRP is required to have gas barrier properties without providing the metal layer or the gas barrier layer, in addition to strength in a case of being molded into a molded product.

An object of the present invention is to provide a prepreg in which gas barrier properties in a case of being molded into a molded product are improved.

### [Solution to Problem]

The present invention has the following aspects.
[1] A prepreg comprising:
   a carbon fiber base material; and
   a thermoplastic resin with which the carbon fiber base material is impregnated,
   wherein the thermoplastic resin comprises a vinyl alcohol-based polymer.
[2] The prepreg according to [1],
   wherein the thermoplastic resin further comprises at least one selected from the group consisting of a polyamide resin, a polyolefin resin, a polyester resin, and a polystyrene resin.
[3] The prepreg according to [2],
   wherein the thermoplastic resin further comprises the polyamide resin.
[4] The prepreg according to [3],
   wherein the polyamide resin comprises polyamide 6.
[5] The prepreg according to [4],
   wherein a contained amount of the polyamide 6 is 50% to 95% by mass with respect to a total mass of the thermoplastic resin.
[6] The prepreg according to any one of [3] to [5],
   wherein a ratio of a mass of the vinyl alcohol-based polymer to a mass of the polyamide resin is 5% to 55% by mass.
[7] The prepreg according to any one of [1] to [6],
   wherein a contained amount of the vinyl alcohol-based polymer is 5% to 40% by mass with respect to the total mass of the thermoplastic resin.
[8] The prepreg according to any one of [1] to [7],
   wherein the vinyl alcohol-based polymer comprises an ethylene-vinyl alcohol copolymer, and
   a contained amount of an ethylene structural unit is 25% to 50% by mole with respect to a total number of moles of structural units constituting the ethylene-vinyl alcohol copolymer.
[9] The prepreg according to any one of [1] to [8],
   wherein a proportion of the carbon fiber base material in the prepreg is 40% to 80% by volume.
[10] The prepreg according to any one of [1] to [9],
   wherein the carbon fiber base material comprises a sheet in which carbon fibers are aligned in one direction.
[11] The prepreg according to any one of [1] to [10],
   wherein an areal weight of the carbon fiber base material is 10 to 300 g/m².
[12] The prepreg according to any one of [1] to [11],
   wherein the carbon fiber base material comprises a carbon fiber having a strand strength of 4.8 GPa or more.
[13] A molded product molded from the prepreg according to any one of [1] to [12].
[14] A pressure container molded from the prepreg according to any one of [1] to [12].
[15] A method for manufacturing a molded product, comprising:
   press-molding the prepreg according to any one of [1] to [12].
[16] A method for manufacturing a molded product, comprising:
   layering the prepreg according to any one of [1] to [12] on a mold,
   wherein, when the prepreg is layered on the mold, the prepreg is continuously and automatically layered while applying pressure to press the prepreg against the mold.
[17] A method for manufacturing a prepreg, comprising stacking a resin film on a carbon fiber base material, and impregnating the carbon fiber base material with a resin included in the resin film by heating and pressurizing,
   wherein a resin film comprising a vinyl alcohol-based polymer and a resin film comprising a polyamide resin are used.
[18] The method for manufacturing a prepreg according to [17],
   wherein the resin film is a laminated film comprising an A layer which is a layer comprising a vinyl alcohol-based polymer and a B layer which is a layer comprising a polyamide resin, and
   the laminated film is stacked on the carbon fiber base material.
[19] The method for manufacturing a prepreg according to [18],
   wherein a thickness of the A layer is 5% to 35% of a thickness of the laminated film.
[20] The method for manufacturing a prepreg according to any one of [17] to [19],
   wherein the vinyl alcohol-based polymer comprises an ethylene-vinyl alcohol copolymer, and
   a contained amount of an ethylene structural unit is 25% to 50% by mole with respect to a total number of moles of structural units constituting the ethylene-vinyl alcohol copolymer.
[21] A prepreg comprising:
   a carbon fiber base material; and
   a thermoplastic resin composition with which the carbon fiber base material is impregnated,
   wherein the thermoplastic resin composition comprises an ethylene-vinyl alcohol copolymer.
[22] The prepreg according to [21],
   wherein a contained amount of the ethylene-vinyl alcohol copolymer is 5% to 40% by mass with respect to a total mass of the thermoplastic resin composition.
[23] The prepreg according to [21] or [22],
   wherein the thermoplastic resin composition further comprises at least one selected from the group consisting of a polyamide resin, a polyolefin resin, a polyester resin, and a polystyrene resin.
[24] The prepreg according to any one of [21] to [23],
   wherein the carbon fiber base material comprises a sheet in which carbon fibers are aligned in one direction.

### [Advantageous Effects of Invention]

According to the preferred aspect of the present invention, it is possible to provide a prepreg in which gas barrier properties in a case of being molded into a molded product are improved. In addition, it is possible to provide a molded product and a pressure container, in which gas barrier properties are improved. In addition, it is possible to provide a method for manufacturing a prepreg in which gas barrier properties in a case of being molded into a molded product are improved, and a method for manufacturing a molded product in which gas barrier properties are improved.

### [Brief Description of Drawings]

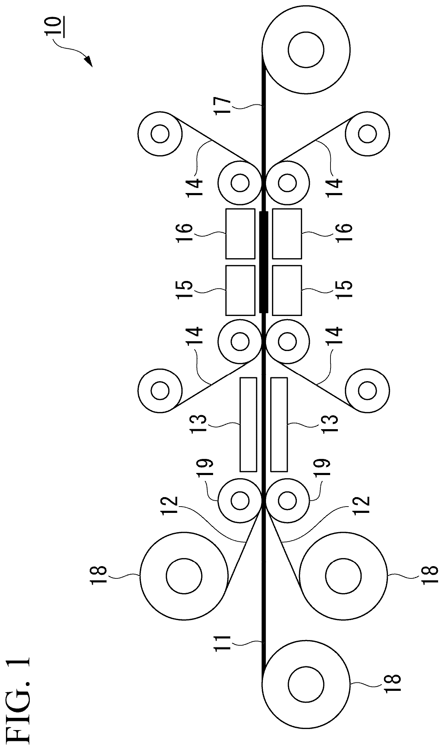

FIG. 1 is a schematic diagram schematically representing an example of a manufacturing apparatus of a prepreg.

### [Description of Embodiments]

### [Prepreg]

Hereinafter, an embodiment of the prepreg according to the present invention will be described.

The prepreg according to the present embodiment is obtained by impregnating a carbon fiber base material with a thermoplastic resin. That is, the prepreg comprises a carbon fiber base material and a thermoplastic resin. Carbon fibers may be replaced with reinforcing fibers depending on the application.

The prepreg may further comprise a component other than the carbon fiber base material and the thermoplastic resin (optional component).

### <Reinforcing fiber>

The reinforcing fibers can be present in the prepreg as a reinforcing fiber base material, and is preferably in a sheet form. Alignment of fibers in the reinforcing fiber base material may be an arrangement of reinforcing fibers in a single direction or an arrangement of reinforcing fibers a random direction. As a form of the reinforcing fiber base material, for example, woven reinforcing fibers, nonwoven reinforcing fibers, and a sheet in which long fibers of the reinforcing fibers are aligned in one direction are exemplary examples. From the viewpoint that a fiber-reinforced plastic having a high specific strength or a high specific elastic modulus can be molded, it is preferable that a sheet consisting of a reinforcing fiber bundle in which continuous fibers are aligned in a single direction is used as the prepreg, and from the viewpoint that handling is easy, it is preferable that a woven fabric of reinforcing fibers is used as the prepreg. An areal weight of the reinforcing fiber base material can be 5 g/m² or more and 4,000 g/m² or less, or 10 g/m² or more and 300 g/m² or less.

As a material of the reinforcing fibers, glass fibers, carbon fibers, aramid fibers, and boron fibers are exemplary examples. From the viewpoint of mechanical properties and weight reduction of the fiber-reinforced plastic to be obtained, the reinforcing fibers are preferably carbon fibers.

A fiber diameter of the carbon fibers can be 3 to 20 µm, and is preferably 4 to 12 µm. The number of carbon fibers in the carbon fiber bundle is preferably 1,000 to 70,000. A sheet-like reinforcing fiber base material in which a plurality of the carbon fiber bundles are aligned in one direction may be used, or a sheet-like reinforcing fiber base material in which chopped carbon fiber bundles obtained by chopping the carbon fiber bundles are sprayed may be used. From the viewpoint of rigidity of the fiber-reinforced plastic to be obtained, a strand tensile strength of the carbon fibers can be 1.5 to 9 GPa, and particularly from the viewpoint of strength when being used for a pressure container, it is preferably 4.8 GPa or more. A strand tensile elastic modulus of the carbon fibers is preferably 150 to 400 GPa. Here, the strand tensile strength and the strand tensile elastic modulus of the carbon fibers are values measured in conformity with JIS R 7601: 1986.

### <Carbon fiber base material>

The carbon fiber base material is an aggregate of carbon fibers, and comprises a plurality of carbon fibers.

The carbon fibers constituting the carbon fiber base material are not particularly limited, and for example, polyacrylonitrile (PAN)-based carbon fibers, petroleum- or coal pitch-based carbon fibers, rayon-based carbon fibers, and lignin-based carbon fibers are exemplary examples. Among these, PAN-based carbon fibers are preferable.

The carbon fibers are preferably continuous fibers. For example, a sheet form in which the carbon fibers which are continuous fibers are aligned in one direction, and a woven form (for example, plain weave, twill weave, satin weave, or the like) are exemplary examples.

Typically, the carbon fibers are used in a form of carbon fiber bundle in which a plurality of carbon fibers are bundled.

A filament number of the carbon fiber bundle is preferably 1,000 to 60,000, more preferably 1,000 to 50,000, and still more preferably 12,000 to 48,000. When the filament number of the carbon fiber bundle is within the above-described range, productivity and mechanical properties on an industrial scale are excellent.

A proportion of the carbon fiber base material in the prepreg, that is, a fiber volume content (Vf) of the carbon fiber base material with respect to the total volume of the prepreg is preferably 40 to 80% by volume, more preferably 40 to 75% by volume, still more preferably 45 to 70% by volume, and particularly preferably 45 to 65% by volume. When the proportion of the carbon fiber base material is the above-described lower limit value or more, strength of a molded product obtained by molding the prepreg according to the present embodiment (hereinafter, also simply referred to as "molded product") is increased. When the proportion of the carbon fiber base material is the above-described upper limit value or less, it is possible to suppress defective appearance due to shortage of the surface resin during molding.

The fiber volume content is a value obtained by a measurement method in conformity with ASTM D3171 or JIS K 7075.

### <Thermoplastic resin>

The thermoplastic resin comprises a vinyl alcohol-based polymer (hereinafter, also referred to as "resin (a)"). The thermoplastic resin serves as a matrix resin in the prepreg. When the thermoplastic resin comprises the resin (a), the gas barrier properties of the molded product are improved.

The vinyl alcohol-based polymer is a polymer having a vinyl alcohol unit, and from the viewpoint of mechanical properties of the molded product and ease of handling of the prepreg, a vinyl alcohol-based copolymer is preferable.

As the resin (a), for example, an ethylene-vinyl alcohol copolymer (EVOH) and polyvinyl alcohol (PVA) are exemplary examples. From the viewpoint of improving extrusion moldability, EVOH is preferable.

The EVOH is a resin that is usually obtained by saponifying an ethylene-vinyl ester copolymer which is a copolymer of ethylene and a vinyl ester monomer, and is a non-aqueous soluble thermoplastic resin.

A method for polymerizing ethylene and a vinyl ester monomer is not particularly limited, and known polymerization methods such as solution polymerization, suspension polymerization, and emulsion polymerization are exemplary examples. Among these, solution polymerization is preferable, and solution polymerization using methanol as a solvent is more preferable.

A method of saponifying the ethylene-vinyl ester copolymer is not particularly limited.

The EVOH produced in this manner comprises an ethylene structural unit and a vinyl alcohol structural unit. In addition, the EVOH may comprise a small amount of vinyl ester structural units which have not been saponified.

As the vinyl ester monomer, for example, aliphatic vinyl esters such as vinyl acetate, vinyl formate, vinyl propionate, vinyl valerate, vinyl butyrate, vinyl isobutyrate, vinyl pivalate, vinyl caprate, vinyl laurate, vinyl stearate, and vinyl versatate; and aromatic vinyl esters such as vinyl benzoate are exemplary examples. Vinyl acetate or an aliphatic vinyl ester having 3 to 20 carbon atoms, preferably 4 to 10 carbon atoms and more preferably 4 to 7 carbon atoms, is preferable, and from the viewpoint of better market availability and impurities treatment efficiency during production, vinyl acetate is more preferable.

The vinyl ester monomer may be used alone or in combination of two or more thereof.

A contained amount of the ethylene structural unit in the EVOH is preferably 20 to 60 mol%, more preferably 25 to 50 mol%, and still more preferably 25 to 35 mol% with respect to the total number of moles of structural units constituting the EVOH. When the contained amount of the ethylene structural unit is the above-described lower limit value or more, the gas barrier properties of the molded product under high humidity are further improved. In addition, impregnating properties of the carbon fiber base material are increased. When the contained amount of the ethylene structural unit is the above-described upper limit value or less, the gas barrier properties of the molded product are further improved.

The contained amount of the ethylene structural unit can be controlled by a pressure of ethylene when the vinyl ester monomer and ethylene are copolymerized.

The contained amount of the ethylene structural unit can be measured in conformity with ISO 14663.

A saponification degree of the vinyl ester component in the EVOH is preferably 90 to 100 mol%, more preferably 95 to 100 mol%, and still more preferably 99 to 100 mol%. When the saponification degree is the above-described lower limit value or more, the gas barrier properties of the molded product are further improved. In addition, thermal stability and moisture resistance of the molded product can be maintained in good condition.

The saponification degree can be controlled by an amount of saponification catalyst (for example, an alkaline catalyst such as sodium hydroxide) used, a temperature, a time, and the like in the saponification of the ethylene-vinyl ester copolymer.

The saponification degree can be measured in conformity with JIS K 6726 (in a solution obtained by uniformly dissolving the EVOH in a mixed solvent of water and methanol).

A melt flow rate (MFR) of the EVOH (210°C, load: 2,160 g) is preferably 0.5 to 100 g/10 min, more preferably 1 to 50 g/10 min, and still more preferably 3 to 35 g/10 min. When the MFR of the EVOH is the above-described lower limit value or more, an increase in viscosity is suppressed, and impregnating properties of the carbon fiber base material are increased. When the MFR of the EVOH is the above-described upper limit value or less, for example, film formability is improved such that drawdown or necking during extrusion molding can be suppressed, and an A layer described later can be easily manufactured.

The MFR is an index of a degree of polymerization of the EVOH, and can be controlled by the amount of a polymerization initiator when copolymerizing ethylene and the vinyl ester monomer or the amount of a solvent.

The MFR can be measured in conformity with JIS K 7210 under the conditions of 210°C and a load of 2,160 g.

The EVOH may further comprise a structural unit derived from the following comonomers, as long as the effects of the present invention are not impaired.

As the comonomer, for example, olefins such as propylene, 1-butene, and isobutene; hydroxy group-containing α-olefins such as 3-butene-1-ol, 3-butene-1,2-diol, 4-pentene-1-ol, and 5-hexene-1,2-diol, and derivatives thereof such as esterified or acylated products thereof; hydroxyalkyl vinylidenes such as 2-methylene-propane-1,3-diol, 3-methylene-pentane-1,5-diol, and the like; hydroxyalkylvinylidene acetates such as 1,3-diacetoxy-2-methylene-propane, 1,3-dipropionyloxy-2-methylene-propane, 1,3-dibutyryloxy-2-methylene-propane, and the like; unsaturated acids such as acrylic acid, methacrylic acid, crotonic acid, (anhydrous) phthalic acid, (anhydrous) maleic acid, (anhydrous) itaconic acid, or salts thereof, or mono- or dialkyl esters having 1 to 18 carbon atoms; acrylamides such as acrylamide, N-alkyl acrylamides having 1 to 18 carbon atoms, N,N-dimethylacrylamide, 2-acrylamidopropanesulfonic acid or a salt thereof, acrylamidopropyl dimethylamine or an acid salt thereof, or quaternary salts thereof; methacrylamides such as methacrylamide, N-alkyl methacrylamides having 1 to 18 carbon atoms, N,N-dimethylmethacrylamide, 2-methacrylamidopropanesulfonic acid or a salt thereof, methacrylamidopropyl dimethylamine or an acid salt thereof, or quaternary salts thereof; N-vinylamides such as N-vinylpyrrolidone, N-vinylformamide, and N-vinylacetamide; vinyl cyanides such as acrylonitrile and methacrylonitrile; vinyl ethers such as alkyl vinyl ethers having 1 to 18 carbon atoms, hydroxyalkyl vinyl ethers, and alkoxyalkyl vinyl ethers; vinyl halogenated compounds such as vinyl chloride, vinylidene chloride, vinyl fluoride, vinylidene fluoride, and vinyl bromide; vinyl silanes such as trimethoxyvinylsilane; allyl halogenated compounds such as allyl acetate and allyl chloride; allyl alcohols such as allyl alcohol and dimethoxyallyl alcohol; and comonomers such as trimethyl-(3-acrylamide-3-dimethylpropyl)-ammonium chloride and acrylamide-2-methylpropanesulfonic acid are exemplary examples.

The comonomer may be used alone or in combination of two or more thereof.

As the resin (a), for example, a resin which is subjected to "post-modification" such as including urethanization, acetalization, cyanoethylation, and oxyalkylenation of EVOH may be used.

EVOH obtained by copolymerizing hydroxy group-containing α-olefins is preferable, and EVOH having 1,2-diols in the side chain is more preferable.

As the resin (a), two or more kinds of the EVOH may be used, or one or more kinds of the EVOH and one or more kinds of PVA may be used in combination.

A contained amount of the resin (a) with respect to the total mass of the thermoplastic resin can be 1% to 100% by mass, preferably 2% to 75% by mass, more preferably 3% to 50% by mass, and still more preferably 5% to 40% by mass. When the contained amount of the resin (a) is the above-described lower limit value or more, the desired gas barrier properties can be sufficiently exhibited. When the contained amount of the resin (a) is the above-described upper limit value of less, a decrease in mechanical properties derived from the thickness of the EVOH can be suppressed.

On the other aspect, from the viewpoint of improving barrier properties against helium or hydrogen gas, which is more easily transmitted, the contained amount of the resin (a) can also be 70% to 100% by mass, or 70% to 85% by mass with respect to the total mass of the thermoplastic resin.

The thermoplastic resin may further comprise a polyamide resin (hereinafter, also referred to as "resin (b)"). When the thermoplastic resin further comprises the resin (b) in addition to the resin (a), mold releasability during manufacturing of the prepreg is improved, and thus the productivity is excellent.

The resin (b) is not particularly limited as long as it is a resin having an amide bond in a repeated structure, and for example, aliphatic polyamide (aliphatic nylon) and aromatic polyamide (aromatic nylon) are exemplary examples.

As the aliphatic polyamide, for example, polycaprolactam (polyamide 6), polyhexamethylene adipamide (polyamide 66), polytetramethylene adipamide (polyamide 46), polyundecanamide (polyamide 11), polydodecanamide (polyamide 12), polyhexamethylene sebacamide (polyamide 610), polyamide 612, polyhexamethylene azelamide (polyamide 69); and a polyamide 6/66 copolymer, a polyamide 6/610 copolymer, a polyamide 6/66/610 copolymer, a polyamide 6/12 copolymer, or a polyamide 6/66/610/12 copolymer, which is a copolymer of these compounds, are exemplary examples.

As the aromatic polyamide, for example, polyhexamethylene terephthalamide (polyamide 6T), polyamide 9T, polyamide MXD6, polyamide MXD10, a polyamide 6/6T copolymer, a polyamide 6T/12 copolymer, a polyamide 6T/66 copolymer, a polycaprolactam/polyhexamethylene isophthalamide copolymer (polyamide 6/6I copolymer), a polyamide 66/61/6 copolymer, a polyamide 6T/6I copolymer, a polyamide 6T/6I/66 copolymer, and a polyamide 6T/M-5T copolymer are exemplary examples.

From the viewpoint of mold releasability during manufacturing of the prepreg and adhesiveness with the carbon fibers, polyamide 6, polyamide 66, polyamide 612, polyamide 11, polyamide 12, polyamide MXD6, polyamide 6T, or polyamide 9T is preferable; polyamide 6, polyamide 66, polyamide 11, polyamide 12, or polyamide MXD6 is more preferable; polyamide 6, polyamide 66, polyamide 11, or polyamide 12 is still more preferable; polyamide 6 or polyamide 66 is still more preferable; and polyamide 6 is particularly preferable.

The resin (b) may be used alone or in combination of two or more thereof.

When the thermoplastic resin comprises polyamide 6, a contained amount of the polyamide 6 can be 1% to 99% by mass with respect to the total mass of the thermoplastic resin, and from the viewpoint of improving mechanical properties, it is preferably 25% to 98% by mass, more preferably 50% to 95% by mass, still more preferably 51% to 95% by mass, and particularly preferably 60% to 95% by mass.

On the other aspect, from the viewpoint of improving the mold releasability, the contained amount of the polyamide 6 can be 2% to 95% by mass, or 5% to 90% by mass with respect to the total mass of the thermoplastic resin.

When the thermoplastic resin comprises the resin (a) and the resin (b), a mass ratio which is a ratio of the mass of the resin (a) to the mass of the resin (b) and is represented by Mass of resin (a)/Mass of resin (b) × 100 (hereinafter, also referred to as "a/b × 100") can be 1% to 99% by mass, preferably 2% to 75% by mass and more preferably 5% to 55% by mass. When a/b × 100 is the above-described lower limit value or more, a decrease in gas barrier properties is further suppressed. When a/b × 100 is the above-described upper limit value or less, the mold releasability during manufacturing of the prepreg is improved.

On the other aspect, from the viewpoint of imparting barrier properties against a gas which is more easily transmitted, while ensuring the mold releasability, a/b × 100 can be 50% to 99% by mass or 70% to 99% by mass.

A proportion of the thermoplastic resin in the prepreg, that is, a weight contained amount (Rc) of the thermoplastic resin with respect to the total volume of the prepreg is preferably 10% to 50% by weight, more preferably 15% to 50% by weight, still more preferably 20% to 45% by weight, and particularly preferably 25% to 45% by weight. When the proportion of the thermoplastic resin is the above-described lower limit value or more, it is possible to suppress defective appearance due to shortage of the surface resin during molding. When the proportion of the thermoplastic resin is the above-described upper limit value or less, the strength of the molded product is increased.

The weight contained amount is a value obtained by a measurement method in conformity with ASTM D3171 or JIS K 7075.

The thermoplastic resin may comprise a thermoplastic resin other than the resin (a) and the resin (b) (hereinafter, also referred to as "resin (c)"), as long as the effects of the present invention are not impaired.

As the resin (c), for example, a polyolefin resin, a polyester resin, a polycarbonate resin, a polyamideimide resin, a polyphenylene oxide resin, a polysulfone resin, a polyethersulfone resin, a polyether ether ketone resin, a polystyrene resin, an ABS resin, a polyphenylene sulfide resin, a liquid crystal polyester resin, an acrylic resin, a vinyl ester resin, an ionomer, an acrylonitrile-styrene copolymer, an ethylene-vinyl acetate copolymer, an ethylene-acrylic acid copolymer, an ethylene-acrylic acid ester copolymer, a polyvinyl chloride, a polyvinylidene chloride, a polyester elastomer, a polyurethane elastomer, a polystyrene elastomer, halogenated polyolefin (chlorinated polyethylene, chlorinated polypropylene, or the like), and aromatic or aliphatic polyketones are exemplary examples; and among these, a polyolefin resin, a polyester resin, or a polystyrene resin is preferable.

The resin (c) may be used alone or in combination of two or more thereof.

As the polyolefin resin, for example, unmodified polyolefin resins such as a polyethylene resin (linear low-density polyethylene, low-density polyethylene, ultralow-density polyethylene, medium-density polyethylene, high-density polyethylene, ethylene-propylene (block or random) copolymer, ethylene-α-olefin (α-olefin having 4 to 20 carbon atoms) copolymer, and the like), a polypropylene resin (polypropylene, propylene-α-olefin (α-olefin having 4 to 20 carbon atoms) copolymer, and the like), polybutene, polypentene, and a polycyclic olefin resin (a polymer having a cyclic olefin structure in at least one of a main chain or a side chain); and modified polyolefin resins such as an unsaturated carboxylic acid-modified polyolefin resin obtained by graft-modifying these unmodified polyolefin resins with an unsaturated carboxylic acid or an ester thereof are exemplary examples.

As the polyester resin, for example, a polyethylene terephthalate resin and a polybutylene terephthalate resin are exemplary examples.

A contained amount of the resin (c) with respect to the total mass of the thermoplastic resin is preferably 30% by mass or less, more preferably 1% by mass or less, and still more preferably 0.1% by mass or less, and it can be made substantially free of the resin (c).

In the present specification, the expression "substantially free" means that the material is not actively blended, except for a case of being inevitably contained.

The total contained amount of the resin (a), the resin (b), and the resin (c) in the thermoplastic resin is 100% by mass.

### <Optional component>

The prepreg may comprise fibers other than the carbon fibers (hereinafter, also referred to as "other fibers"). In the present specification, carbon fibers and other fibers are collectively referred to as "reinforcing fibers".

As the other fibers, inorganic fibers, organic fibers, metal fibers, or reinforcing fibers with a hybrid configuration obtained by combining the above fibers can be used other than the carbon fibers.

As the inorganic fibers other than the carbon fibers, for example, graphite fibers, silicon carbide fibers, alumina fibers, tungsten carbide fibers, boron fibers, and glass fibers are exemplary examples.

As the organic fibers, for example, aramid fibers, high-density polyethylene fibers, other general nylon fibers, and polyester fibers are exemplary examples.

As the metal fibers, for example, stainless steel fibers and iron fibers are exemplary examples.

As the reinforcing fibers with a hybrid configuration, for example, metal-coated carbon fibers are exemplary examples.

Glass fibers are preferable as other fibers in consideration of mechanical properties such as the strength of the prepreg.

The other fibers may be used alone or in combination of two or more thereof.

The other fibers are preferably continuous fibers.

The prepreg may further contain an additive other than the reinforcing fibers.

As the additive, for example, a flame retardant, a weather-resistant improver, an antioxidant, a heat stabilizer, an ultraviolet absorber, a plasticizer, a lubricant, a colorant, a compatibilizing agent, and a conductive filler are exemplary examples.

The additive may be used alone or in combination of two or more thereof.

From the viewpoint of maintaining mechanical strength, a proportion of the additive in the prepreg, that is, a contained amount of the additive with respect to the total volume of the prepreg is preferably 5% by mass or less, more preferably 1 % by mass or less, and still more preferably 0.5% by mass or less.

The total contained amount of the thermoplastic resin, the carbon fiber base material, the other fibers, and the additive in the prepreg is 100% by mass. The total contained amount of the thermoplastic resin and the carbon fiber base material in the prepreg may be 70% by mass or more, 80% by mass or more, 90% by mass or more, or 100% by mass with respect to the total mass of the prepreg.

### <Method for manufacturing prepreg>

A method for manufacturing the prepreg is not particularly limited, and the prepreg can be manufactured by a known method. For example, the prepreg can be manufactured by impregnating the carbon fiber base material with the above-described thermoplastic resin.

As an impregnation method with the thermoplastic resin, for example, a method of processing the thermoplastic resin into a film having a thickness of approximately 10 to 100 µm, fibers having a fiber diameter of approximately 5 to 50 µm, or a powder having an average particle diameter of approximately 10 to 100 µm to adhere the thermoplastic resin to the carbon fiber base material is an exemplary example.

When the prepreg comprises the additive, a thermoplastic resin composition is prepared by mixing the thermoplastic resin and the additive, and the carbon fiber base material is impregnated with the thermoplastic resin composition.

When the prepreg comprises the other fibers, a reinforcing fiber base material comprising the carbon fibers and the other fibers may be impregnated with the thermoplastic resin or the thermoplastic resin composition.

The "reinforcing fiber base material" is an aggregate of the carbon fibers and the other fibers (when comprising the other fibers).

Hereinafter, one embodiment of the method for manufacturing the prepreg will be described.

In the method for manufacturing the prepreg according to the present embodiment, the prepreg is manufactured by a method in which a resin film including a layer comprising the above-described resin (a) (hereinafter, also referred to as "A layer") is stacked on the carbon fiber base material by heating and pressurizing, so that the carbon fiber base material is impregnated with the resin comprised in the resin film.

Specifically, using a manufacturing apparatus 10 shown in FIG. 1, a carbon fiber base material 11 is unwound from a roll 18. Separately, the carbon fiber base material 11 passes between resin films 12 unwound from a plurality of rolls 18 and a pinching roller 19, and the resin films 12 are thus stacked on upper and lower surfaces of the carbon fiber base material 11 to form a stacked body. The stacked body is pre-heated by a heater 13, and release films 14 are disposed on upper and lower surfaces of the stacked body. Next, the carbon fiber base material 11 is impregnated with the thermoplastic resin in the stacked body by being pressurized by a hot plate press 15 heated to a temperature equal to or higher than a melting point of the resin comprised in the resin film 12 and being pressurized by a cooling press 16 cooled to a temperature equal to or lower than a solidification temperature of the resin comprised in the resin film 12. Thereafter, the release films 14 are removed to obtain a prepreg 17. A heating temperature of the stacked body is not particularly limited as long as it is a temperature at which the thermoplastic resin, that is, the resin comprised in the resin film 12 is heated and melted.

The resin film to be stacked on the carbon fiber base material includes the A layer.

The resin film may be a single-layer film consisting of the A layer, or may be a laminated film including the A layer and a layer comprising the resin (b) (hereinafter, also referred to as "B layer"). In addition, for example, an aspect may be adopted in which a resin film comprising a vinyl alcohol-based copolymer is used as the resin film 12 to be stacked on the upper surface of the carbon fiber base material 11 to form a single-layer film (A) consisting of the A layer, and a resin film comprising a polyamide resin is used as the resin film 12 to be stacked on the lower surface of the carbon fiber base material 11 to form a single-layer film (B) consisting of the B layer. When the single-layer film is used, the single-layer film (A) may be stacked on the carbon fiber base material 11 to be impregnated to obtain a resin-impregnated carbon fiber base material (A), the single-layer film (B) may be further stacked on the resin-impregnated carbon fiber base material (A) to be impregnated, or the resin-impregnated carbon fiber base material (A) and the single-layer film (B) may be stacked on the carbon fiber base material 11 to be impregnated. The carbon fiber base material 11 may be stacked to be interposed between the single-layer film (A) and the single-layer film (B).

The laminated film may have a two-layer structure including one A layer and one B layer, or may have a multilayer structure of three or more layers. For example, when the laminated film has a three-layer structure, the laminated film may have a B/A/B configuration in which one A layer is sandwiched between two B layers, an A/B/A configuration in which one B layer is sandwiched between two A layers, or a configuration including one A layer, one B layer, and other layers excluding the A layer and the B layer.

From the viewpoint of improving the barrier properties and the mechanical properties by stretching, the resin film is preferably a laminated film including the A layer and the B layer, and particularly preferably a laminated film having a B/A/B configuration in which one A layer is sandwiched between two B layers.

A thickness of the A layer is preferably 1 % to 99%, more preferably 2% to 50%, and still more preferably 5% to 35% of the total thickness of the resin film. When the thickness of the A layer is the above-described upper limit value or less, uneven stretching or breakage during the stretching is suppressed, and when the thickness of the A layer is the above-described lower limit value or more, the gas barrier properties can be maintained.

When the resin film is a single-layer film, the resin film is obtained by extrusion-molding, into a film form, the resin (a) or a thermoplastic resin composition (a) obtained by mixing the resin (a) with an additive.

When the resin film is a laminated film, the resin film is obtained by extrusion-molding, into a film form, each of the resin (a) or the thermoplastic resin composition (a) and each of the resin (b) or a thermoplastic resin composition (b) obtained by mixing the resin (b) with an additive, to be laminated.

In addition, a commercially available product may be used as the resin film.

When the laminated film including the A layer and the B layer is used as the resin film, the laminated film may be stacked on the carbon fiber base material such that the A layer is in contact with the carbon fiber base material, or the laminated film may be stacked on the carbon fiber base material such that the B layer is in contact with the carbon fiber base material. In addition, when the resin or the thermoplastic resin composition used for the laminated film has a melting point and the melting point is different between the A layer and the B layer, or when the resin or the thermoplastic resin composition used for the laminated film does not have a melting point and a glass transition point (Tg) is different between the A layer and the B layer, it is preferable to heat the resin film at a temperature higher than one of the melting point or the Tg to be impregnated into the carbon fiber base material.

When the prepreg 17 is manufactured by using the manufacturing apparatus 10 shown in FIG. 1, the resin films 12 to be stacked on the upper and lower surfaces of the carbon fiber base material 11 may be the same type or different types. An example of a combination of the resin films 12 to be stacked on the upper and lower surfaces of the carbon fiber base material 11 is as follows.
· A combination in which both the upper and lower surfaces of the carbon fiber base material 11 are stacked with the resin film 12, which is a single-layer film consisting of the A layer.
· A combination in which one resin film 12 is a single-layer film consisting of the A layer and the other resin film 12 is a single-layer film consisting of the B layer.
· A combination in which one resin film 12 is a single-layer film consisting of the A layer and the other resin film 12 is a laminated film including the A layer and the B layer.
· A combination in which one resin film 12 is a single-layer film consisting of the B layer and the other resin film 12 is a laminated film including the A layer and the B layer.
· A combination in which both the resin films 12 stacked on the upper and lower surfaces of the carbon fiber base material 11 are laminated films including the A layer and the B layer.

In the manufacturing apparatus 10 shown in FIG. 1, the resin films 12 are stacked on the upper and lower surfaces of the carbon fiber base material 11, but the carbon fiber base material 11 and the resin films 12 may be replaced with each other. That is, the prepreg may be manufactured by stacking the carbon fiber base materials 11 on upper and lower surfaces of the resin film 12 to form a stacked body, and heating and pressurizing the stacked body to impregnate the carbon fiber base materials 11 with the thermoplastic resin in the stacked body. The resin film 12 in this case may be a single-layer film consisting of the A layer, or may be a laminated film including the A layer and the B layer; and the laminated film is preferable. The laminated film may have a two-layer structure including one A layer and one B layer, or may have a multilayer structure of three or more layers. Among these, a laminated film having a B/A/B configuration in which one A layer is sandwiched between two B layers is preferable.

As another aspect of the resin film, for example, a single-layer film or a laminated film, including one or more layers of an EVOH-containing layer (hereinafter, also referred to as "EVOH layer") as the A layer, is an exemplary example. The EVOH layer can be formed into a laminated film with a base material resin layer comprising a thermoplastic resin other than the EVOH as a main component (hereinafter, the resin used in the base material resin layer is also referred to as "base material resin"), so that the EVOH layer can be further imparted with strength, protected from the influence of moisture, or the like.

As the base material resin, the resins (b) and (c) described above are exemplary examples. From the viewpoint of protecting the EVOH layer from the influence of moisture, a hydrophobic resin is preferable; a polyamide resin, a polyolefin resin, a polyester resin, or a polystyrene resin is more preferable; a polyethylene resin, a polypropylene resin, a polycyclic olefin resin, of a polyolefin resin such as an unsaturated carboxylic acid-modified polyolefin resin is still more preferable; and a polycyclic olefin resin is particularly preferable as the hydrophobic resin.

The base material resin may be used alone or in combination of two or more thereof.

As an example of the layer configuration of the resin film, when the EVOH layer is denoted by a (a1, a2, ...), and the base material resin layer is denoted by b (b1, b2, ...), any combination such as a/b, b/a/b, a/b/a, a1/a2/b, a/b1/b2, b2/b1/a/b1/b2, and b2/b1/a/b1/a/b1/b2 can be used. In addition, when a recycled layer comprising a mixture of the EVOH and the base material resin, which can be obtained by re-melting end parts and defective products generated during the process of manufacturing the resin film, is defined as R, the layer configuration of the resin film can be b/R/a, b/R/a/b, b/R/a/R/b, b/a/R/a/b, b/R/a/R/a/R/b, or the like. The number of layers in the resin film is preferably 2 to 15 and more preferably 3 to 10 in total.

In the above-described layer configuration, an adhesive resin layer comprising an adhesive resin may be interposed between the respective layers as necessary.

As the adhesive resin, a known adhesive resin can be used, and for example, the adhesive resin may be appropriately selected according to the type of the base material resin. Typically, a modified polyolefin polymer comprising a carboxyl group, which is obtained by chemically bonding an unsaturated carboxylic acid or an anhydride thereof to a polyolefin resin by an addition reaction, a graft reaction, or the like, is an exemplary example. More specifically, for example, maleic acid anhydride graft-modified polyethylene, maleic acid anhydride graft-modified polypropylene, a maleic acid anhydride graft-modified ethylene-propylene (block or random) copolymer, a maleic acid anhydride graft-modified ethylene-ethyl acrylate copolymer, a maleic acid anhydride graft-modified ethylene-vinyl acetate copolymer, a maleic acid anhydride-modified polycyclic olefin resin, and a maleic acid anhydride graft-modified polyolefin resin are exemplary examples.

The adhesive resin may be used alone or in combination of two or more thereof.

When the adhesive resin layer is interposed between the EVOH layer and the base material resin layer in the resin film, it is preferable to use an adhesive resin having excellent hydrophobicity, because the adhesive resin layer is at least one layer positioned on both sides of the EVOH layer.

One or more of the EVOH layer, the base material resin layer, and the adhesive resin layer may comprise, as necessary, an additive known in the related art, such as a plasticizer, a filler, clay (montmorillonite or the like), a colorant, an antioxidant, an antistatic agent, a lubricant, a nuclear material, a blocking inhibitor, and wax, as long as the additives do not impair the gist of the present invention (for example, in an amount of 30% by mass or less, preferably 10% by mass or less with respect to the total mass of the layers).

As a form of the prepreg thus obtained, for example, a unidirectional prepreg (UD prepreg) that a sheet-like carbon fiber base material in which the carbon fibers are aligned in one direction is impregnated with the thermoplastic resin, a cloth prepreg in which carbon fiber fabric is impregnated with the thermoplastic resin, and a towpreg in which a tow (carbon fiber bundle) is pre-impregnated with the thermoplastic resin are exemplary examples.

A thickness of the prepreg is preferably 0.04 to 0.7 mm and more preferably 0.04 to 0.4 mm.

### <Effect>

In the above-described prepreg, since the carbon fiber base material is impregnated with the thermoplastic resin comprising the resin (a) having gas barrier properties, the gas barrier properties are improved.

Therefore, when a molded product obtained by molding the prepreg having excellent gas barrier properties is used, for example, as a reinforcing layer of a high-pressure tank, a high-pressure tank having excellent gas barrier properties can be obtained without providing a metal layer or a gas barrier layer. In addition, when the molded product obtained by molding the prepreg according to the embodiment of the present invention is used, since it is not necessary to provide the gas barrier layer, a problem such as interlayer peeling due to insufficient interlayer adhesion between the gas barrier layer and the reinforcing layer, of gas retained in the interlayer being leaked to the outside due to a pressure change is less likely to occur.

### [Molded product]

The molded product can be obtained by molding the above-described prepreg. The molded product may be formed by layering and integrating the prepregs, or may be formed by using only one prepreg.

The molded product is preferably a molded product obtained by molding a layered body in which two or more sheets of the above-described prepregs are layered. The molded product may be obtained by molding a layered body which is obtained by layering a combination of the above-described prepreg and a prepreg other than the above-described prepreg.

The layering configuration of the prepreg in the layered body is not particularly limited.

The number of prepregs layered in the layered body can be appropriately set according to the thickness of the prepregs and the thickness required for the molded product.

When the prepreg is the UD prepreg, the fiber direction of carbon fibers of each UD prepreg to be layered can be appropriately set according to the physical properties required for the molded product. The fiber directions of carbon fibers of the UD prepregs may be the same direction. In addition, for example, when the physical properties of the molded product are required to be isotropic, the UD prepregs are preferably layered so that the fiber directions of carbon fibers of the UD prepregs to be layered in a plan view are a combination of 0° and 90°, a combination of 0°, 45°, 90°, and -45°, or a combination of 0°, 60°, and -60°and are symmetrical about the thickness direction.

### <Method for manufacturing molded product>

The molded product is obtained by molding the prepreg.

A method for molding the prepreg is not particularly limited, and a method of molding one sheet of the above-described prepreg, the layered body obtained by layering a plurality sheet of the above-described prepregs, or the layered body obtained by layering the above-described prepreg and a prepreg other than the above-described prepreg by, for example, a metal mold pressing method, an autoclave method, or a hot pressing/cold pressing method is an exemplary example.

As a method of layering the prepreg, for example, an automated layering method utilizing a robot is an exemplary example. Specifically, when the prepreg is layered on the mold, the prepreg can be continuously and automatically layered while applying a pressure to press the prepreg against the mold. In addition, in order to facilitate demolding of the layered body from the mold, a mold release agent may be applied to the mold, or a mold release film may be disposed on the mold, and the prepreg may be automatically laminated thereon.

The molded product described above has excellent gas barrier properties, and is particularly suitable as a reinforcing layer of a pressure tank. In addition, the molded product according to the embodiment of the present invention can be used as a pressure container.

### [Examples]

Hereinafter, the present invention will be described in more detail with reference to Examples, but the present invention is not limited to these.

### [Material]

### <Thermoplastic resin>

Thermoplastic resins used in each of Examples are shown below.
· Resin film (1): laminated film of NY/EVOH/NY; the total thickness of the B layers comprising the NY (polyamide 6) was 20.5 µm, and the thickness of the A layer comprising the EVOH was 4.5 µm (that is, 18% of the thickness of the laminated film); the contained amount of the ethylene structural unit in the EVOH was 25 mol%; and a ratio of the mass of the EVOH to the mass of the NY (Mass of EVOH/Mass of NY × 100) was 24% by mass
· Resin film (2): laminated film of NY/EVOH/NY; the total thickness of the B layers comprising the NY (polyamide 6) was 10.5 µm, and the thickness of the A layer comprising the EVOH was 4.5 µm (that is, 30% of the thickness of the laminated film); the contained amount of the ethylene structural unit in the EVOH was 25 mol%; and a ratio of the mass of the EVOH to the mass of the NY (Mass of EVOH/Mass of NY × 100) was 46% by mass
· Resin film (3): laminated film of NY/EVOH/NY; the total thickness of the B layers comprising the NY (polyamide 6) was 13.5 µm, and the thickness of the A layer comprising the EVOH was 1.5 µm (that is, 10% of the thickness of the laminated film); the contained amount of the ethylene structural unit in the EVOH was 25 mol%; and a ratio of the mass of the EVOH to the mass of the NY (Mass of EVOH/Mass of NY × 100) was 12% by mass
· Resin film (4): laminated film of NY/EVOH/NY; the total thickness of the B layers comprising the NY (polyamide 6) was 20.5 µm, and the thickness of the A layer comprising the EVOH was 4.5 µm (that is, 18% of the thickness of the laminated film); the contained amount of the ethylene structural unit in the EVOH was 32 mol%; and a ratio of the mass of the EVOH to the mass of the NY (Mass of EVOH/Mass of NY × 100) was 23% by mass
· Resin film (5): single-layer film of EVOH (thickness: 25 µm); the contained amount of the ethylene structural unit in the EVOH was 25 mol%
· Resin film (6): single-layer film of NY (thickness: 25 µm)

### <Carbon fiber>

As the carbon fibers, PAN-based carbon fibers (manufactured by Mitsubishi Chemical Corporation, trade name "TR50S", fiber diameter: 7 µm, 1,000 tex, 15,000 strands) were used.

### [Evaluation method]

### <Evaluation of gas barrier properties: measurement of oxygen transmission amount (OTR)>

Using an oxygen permeability tester (manufactured by MOCON, product name "Oxtran 2/21"), a molded product used for evaluation was cut to have a dimension of a gas barrier measurement area of 50 cm² or more, and an oxygen transmission amount (cc/m²·day·atm) was measured under conditions of a temperature of 20°C and a humidity of 65 %RH.

The detection limit value in the present test machine was 0.05 cc/m²·day·atm. When the oxygen transmission amount was less than the detection limit value, the result is indicated as "< 0.05".

### <Evaluation of mechanical properties: 0° bending>

A test piece was obtained from the molded product, and using a universal testing machine (manufactured by Instron Corporation, product name "INSTRON 5565") equipped with a three-point bending jig (indenter R = 5.0 mm, support R = 3.2 mm) in accordance with ASTM D790, a 0° bending test was performed under conditions of a ratio L/d = 40 of a distance (L) between supports to a thickness (d) of the test piece, and a crosshead speed = (L² × 0.01)/(6 × d), thereby measuring a 0° bending strength.

Dimensions of the test piece used for the measurement were set to a width of 12.7 mm and a length of 100 mm.

### <Evaluation of mechanical properties: 90° bending>

A test piece was obtained from the molded product, and using a universal testing machine (manufactured by Instron Corporation, product name "INSTRON 5565") equipped with a three-point bending jig (indenter R = 5.0 mm, support R = 3.2 mm) in accordance with ASTM D790, a 90° bending test was performed under conditions of a ratio Lid = 16 of a distance (L) between supports to a thickness (d) of the test piece, and a crosshead speed = (L² × 0.01)/(6 × d), thereby measuring a 90° bending strength.

Dimensions of the test piece used for the measurement were set to a width of 12.7 mm and a length of 50 mm.

### [Example 1]

### <Production of prepreg>

A prepreg was produced by stacking the resin film (1) on, as the carbon fiber base material, a carbon fiber sheet in which carbon fibers were aligned in one direction, and impregnating the carbon fiber sheet with the resin film (1) by heating and melting. The obtained prepreg had a thickness of approximately 0.18 mm, a fiber volume content (Vf) of the carbon fiber base material measured according to ASTM D3171 was 60% by volume, and a/b × 100 was 24% by mass.

### <Production of molded product and evaluation of molded product and prepreg>

One sheet or 11 sheets of a prepreg obtained by cutting the prepreg into a dimension of 178 mm × 328 mm were layered such that fiber directions of the prepregs were all directed to the 0° direction, to obtain a prepreg A having a thickness of 0.18 mm and a layered body B having a thickness of 2 mm.

Separately, the obtained layered body B was placed in a lower mold of a titanium mold, the upper mold was closed, and then using a two-stage press (manufactured by Shinto Metal Industries, Ltd., product name "50 ton press") which was a 50 t press machine, the metal mold was pre-heated to 260°C in the press machine set at 270°C for approximately 10 minutes, and then compression-molded for 30 minutes under a molding condition of 5 MPa. Thereafter, the metal mold was transported to a press board face in which a temperature was adjusted to 60°C, and the temperature was lowered to 60°C in approximately 3 minutes to obtain a molded product B (thickness: 2 mm) of 180 mm × 330 mm.

Using the obtained prepreg A, gas barrier properties (200 µm conversion) were evaluated, and using the molded product B, mechanical properties were evaluated. The test piece was dried at 110°C for 4 hours before the evaluation of the mechanical properties. The results are shown in Table 1.

### [Example 2]

A prepreg having a thickness of approximately 0.18 mm and a fiber volume content (Vf) of the carbon fiber base material of 60% by volume was produced in the same manner as in Example 1, except that the resin film (2) was used instead of the resin film (1). a/b × 100 was 23% by mass. In addition, a prepreg and a molded product for evaluation of gas barrier properties and mechanical properties were also obtained.

Using the obtained prepreg and molded product, the gas barrier properties (200 µm conversion) and the mechanical properties were evaluated in the same manner as in Example 1. The test piece was dried at 50°C for 2 days before the evaluation of the mechanical properties. The results are also shown in Table 1.

### [Example 3]

A prepreg having a thickness of approximately 0.18 mm and a fiber volume content (Vf) of the carbon fiber base material of 60% by volume was produced in the same manner as in Example 1, except that the resin film (3) was used instead of the resin film (1). a/b × 100 was 12% by mass. In addition, a prepreg and a molded product for evaluation of gas barrier properties and mechanical properties were also obtained.

Using the obtained prepreg and molded product, the gas barrier properties (200 µm conversion) and the mechanical properties were evaluated in the same manner as in Example 1. The test piece was dried at 50°C for 2 days before the evaluation of the mechanical properties. The results are also shown in Table 1.

### [Example 4]

A prepreg having a thickness of approximately 0.18 mm and a fiber volume content (Vf) of the carbon fiber base material of 60% by volume was produced in the same manner as in Example 1, except that the resin film (4) was used instead of the resin film (1). a/b × 100 was 46% by mass. In addition, a prepreg and a molded product for evaluation of gas barrier properties and mechanical properties were also obtained.

Using the obtained prepreg and molded product, the gas barrier properties (200 µm conversion) and the mechanical properties were evaluated in the same manner as in Example 1. The test piece was dried at 50°C for 2 days before the evaluation of the mechanical properties. The results are also shown in Table 1.

### [Example 5]

A prepreg having a thickness of approximately 0.06 mm and a fiber volume content (Vf) of the carbon fiber base material of 60% by volume was produced in the same manner as in Example 1, except that the resin film (5) was used instead of the resin film (1).

3 sheets or 34 sheets of the prepreg obtained by cutting the prepreg into a dimension of 178 mm × 328 mm were layered such that fiber directions of the prepregs were all directed to the 0° direction, to obtain a layered body C having a thickness of 0.18 mm and a layered body D having a thickness of 2 mm.

The obtained layered body C was placed in a press machine having a plurality of plate surfaces and adjusted to a temperature of 50°C to 250°C, and compression molding was performed once in each plate surface to obtain a molded product C (thickness: 0.18 mm) of 180 mm × 330 mm.

Separately, the obtained layered body D was placed in a lower mold of a titanium mold, the upper mold was closed, and then using a two-stage press which was a 50 t press machine, the metal mold was pre-heated to 220°C in the press machine set at 230°C for approximately 10 minutes, and then compression-molded for 30 minutes under a molding condition of 5 MPa. Thereafter, the metal mold was transported to a press board face in which a temperature was adjusted to 60°C, and the temperature was lowered to 60°C in approximately 3 minutes to obtain a molded product D (thickness: 2 mm) of 180 mm × 330 mm.

Using the obtained molded product C, gas barrier properties (200 µm conversion) were evaluated, and using the molded product D, mechanical properties were evaluated. The results are shown in Table 1.

### [Example 6]

One sheet or 10 sheets of a prepreg obtained by cutting a thermosetting prepreg (manufactured by Mitsubishi Chemical Corporation, trade name "TR361E250S") in which the carbon fiber base material was impregnated with a thermosetting resin into a dimension of 298 mm × 298 mm were layered such that fiber directions of the prepregs were all directed to the 0° direction, to obtain a prepreg E having a thickness of 0.25 mm and a layered body F having a thickness of 2.5 mm.

One cut prepreg was placed in a metal mold set at 140°C in a 100 t press machine (manufactured by YAMAMOTO ENG.WORKS Co., LTD., product name "100 t press"), and compression molding was performed for 5 minutes under a molding condition of 5 MPa to obtain a molded product E (thickness: 0.250 mm) of 300 mm × 300 mm.

The obtained laminate F was separately placed in a metal mold set at 140°C in the 100 t press machine, and compression molding was performed for 5 minutes under a molding condition of 5 MPa to obtain a molded product F (thickness: 2 mm) of 300 mm × 300 mm.

Using the obtained molded product E, gas barrier properties (200 µm conversion) were evaluated, and using the molded product F, mechanical properties were evaluated. The results are shown in Table 1.

### [Example 7]

A prepreg having a thickness of approximately 0.18 mm and a fiber volume content (Vf) of the carbon fiber base material of 60% by volume was produced in the same manner as in Example 1, except that the resin film (6) was used instead of the resin film (1). In addition, a prepreg and a molded product for evaluation of gas barrier properties and mechanical properties were also obtained.

Using the obtained prepreg and molded product, the gas barrier properties (200 µm conversion) and the mechanical properties were evaluated. The test piece was dried at 110°C for 4 hours before the evaluation of the mechanical properties. The results are also shown in Table 1.

**[Table 1]**

| | | Example 1 | Example 2 | Example 3 | Example 4 | Example 5 | Example 6 | Example 7 |
|---|---|---|---|---|---|---|---|---|
| Matrix resin | | Resin film (1) | Resin film (2) | Resin film (3) | Resin film (4) | Resin film (5) | Thermosetting resin | Resin film (6) |
| Reinforced fibers | | TR50S | TR50S | TR50S | TR50S | TR50S | TR50S | TR50S |
| Gas barrier properties | Oxygen transmission amount per 200 µm thickness of molded product [cc. 200 µm/m²·day·atm] | 0.07 | 0.07 | 0.10 | 0.09 | < 0.05 | 2.54 | 0.14 |
| Mechanical properties | 0° bending strength [MPa] | 1610 | 1413 | 1550 | 1786 | 2002 | 1590 | 1668 |
| | 90° bending strength [MPa] | 148 | 130 | 131 | 141 | 89 | 79 | 143 |

As is clear from Table 1, the molded product obtained by molding the prepreg obtained in Examples 1 to 5 was more excellent in gas barrier properties than the molded product obtained by molding the prepreg used in Examples 6 and 7.

It was assumed that the mechanical properties were significantly inferior to those of the thermosetting prepreg in which a design suitable for expressing a function as the molded product was performed, but the mechanical properties of the molded product obtained in Examples 1 to 5 were sufficient as the carbon fiber reinforced polymer, and in particular, the molded product obtained in Example 4 exhibited almost the same excellent values as compared with Example 7. Therefore, it was found that the obtained prepreg also had excellent adhesiveness between the carbon fibers and the matrix resin, and exhibited excellent properties derived from the carbon fibers.

### [Industrial Applicability]

The prepreg and molded product according to the embodiment of the present invention can be used for general industrial applications such as sporting goods, automobiles, pressure tanks, aircraft, and tension materials; and exhibit particularly high performance in a case of being used for a pressure tank.

### [Reference Signs List]

10: Manufacturing apparatus
11: Carbon fiber base material
12: Resin film
13: Heater
14: Release film
15: Hot plate press
16: Cooling press
17: Prepreg
18: Roll
19: Pinching roller

## Claims

1. A prepreg comprising:
a carbon fiber base material; and
a thermoplastic resin with which the carbon fiber base material is impregnated,
wherein the thermoplastic resin comprises a vinyl alcohol-based polymer.

2. The prepreg according to claim 1,
wherein the thermoplastic resin further comprises at least one selected from the group consisting of a polyamide resin, a polyolefin resin, a polyester resin, and a polystyrene resin.

3. The prepreg according to claim 2,
wherein the thermoplastic resin further comprises the polyamide resin.

4. The prepreg according to claim 3,
wherein the polyamide resin comprises polyamide 6.

5. The prepreg according to claim 4,
wherein a contained amount of the polyamide 6 is 50% to 95% by mass with respect to a total mass of the thermoplastic resin.

6. The prepreg according to any one of claims 3 to 5,
wherein a ratio of a mass of the vinyl alcohol-based polymer to a mass of the polyamide resin is 5% to 55% by mass.

7. The prepreg according to any one of claims 1 to 6,
wherein a contained amount of the vinyl alcohol-based polymer is 5% to 40% by mass with respect to the total mass of the thermoplastic resin.

8. The prepreg according to any one of claims 1 to 7,
wherein the vinyl alcohol-based polymer comprises an ethylene-vinyl alcohol copolymer, and
a contained amount of an ethylene structural unit is 25% to 50% by mole with respect to a total number of moles of structural units constituting the ethylene-vinyl alcohol copolymer.

9. The prepreg according to any one of claims 1 to 8,
wherein a proportion of the carbon fiber base material in the prepreg is 40% to 80% by volume.

10. The prepreg according to any one of claims 1 to 9,
wherein the carbon fiber base material comprises a sheet in which carbon fibers are aligned in one direction.

11. The prepreg according to any one of claims 1 to 10,
wherein an areal weight of the carbon fiber base material is 10 to 300 g/m².

12. The prepreg according to any one of claims 1 to 11,
wherein the carbon fiber base material comprises a carbon fiber having a strand strength of 4.8 GPa or more.

13. A molded product molded from the prepreg according to any one of claims 1 to 12.

14. A pressure container molded from the prepreg according to any one of claims 1 to 12.

15. A method for manufacturing a molded product, comprising:
press-molding the prepreg according to any one of claims 1 to 12.

16. A method for manufacturing a molded product, comprising:
layering the prepreg according to any one of claims 1 to 12 on a mold,
wherein, when the prepreg is layered on the mold, the prepreg is continuously and automatically layered while applying pressure to press the prepreg against the mold.

17. A method for manufacturing a prepreg, comprising stacking a resin film on a carbon fiber base material, and impregnating the carbon fiber base material with a resin included in the resin film by heating and pressurizing,
wherein a resin film comprising a vinyl alcohol-based polymer and a resin film comprising a polyamide resin are used.

18. The method for manufacturing a prepreg according to claim 17,
wherein the resin film is a laminated film comprising an A layer which is a layer comprising a vinyl alcohol-based polymer and a B layer which is a layer comprising a polyamide resin, and
the laminated film is stacked on the carbon fiber base material.

19. The method for manufacturing a prepreg according to claim 18,
wherein a thickness of the A layer is 5% to 35% of a thickness of the laminated film.

20. The method for manufacturing a prepreg according to any one of claims 17 to 19,
wherein the vinyl alcohol-based polymer comprises an ethylene-vinyl alcohol copolymer, and
a contained amount of an ethylene structural unit is 25% to 50% by mole with respect to a total number of moles of structural units constituting the ethylene-vinyl alcohol copolymer.

21. A prepreg comprising:
a carbon fiber base material; and
a thermoplastic resin composition with which the carbon fiber base material is impregnated,
wherein the thermoplastic resin composition comprises an ethylene-vinyl alcohol copolymer.

22. The prepreg according to claim 21,
wherein a contained amount of the ethylene-vinyl alcohol copolymer is 5% to 40% by mass with respect to a total mass of the thermoplastic resin composition.

23. The prepreg according to claim 21 or 22,
wherein the thermoplastic resin composition further comprises at least one selected from the group consisting of a polyamide resin, a polyolefin resin, a polyester resin, and a polystyrene resin.

24. The prepreg according to any one of claims 21 to 23,
wherein the carbon fiber base material comprises a sheet in which carbon fibers are aligned in one direction.
